# EUROPEAN PATENT APPLICATION

(11) **EP 1 568 977 A1**
(43) Date of publication of application: **31.08.2005**
(21) Application number: 04251086.7
(22) Date of filing: 26.02.2004
(51) Int. Cl.: G01K 1/10, G01K 1/12, B01J 8/02

(54) **Shield for use in dehydrogenation reactors**

(71) Applicant: BOREALIS A/S, 3960 Stathelle (NO)
(72) Inventor: Roterud, Per, 3960 Stathelle (NO); Jens, Klaus J., 3070 Langesund (NO); Arnesen, Tore, 7053 Ranheim (NO); Edwin, Emil, 7034 Trondheim (NO)
(74) Representative: Jackson, Robert Patrick

(57) **Abstract**

A protective device, such as a thermowell, in which at least the exterior portion is made of an aluminium containing stainless steel alloy. The aluminium within the alloy reacts with oxygen to form a thin layer of aluminium oxide on the exterior of the shield. This layer provides protection against the extreme heat found within the catalyst and is self healing if scratched.

In addition the layer is thin enough to allow an thermocouple positioned within the shield to give an accurate indication of the temperature in the reactor.

## Description

This invention relates to a protective shield for measuring devices, in particular those used in dehydrogenation reactors.

Dehydrogenation is a process used to convert hydrocarbons (such as isobutane, isopentane, butane and pentane) into different, more desirable compounds. For example, propene, or propylene, is a very valuable hydrocarbon which can be polymerised and used in a wide variety of products. Propane can be converted into propylene using a dehydrogenation process, which involves passing the propane over a heated metal catalyst.

Dehydrogenation reactions are endothermic and therefore the temperature of the catalyst gradually drops throughout the reaction, causing a similar decrease in the hydrocarbon conversion rate. Consequently the reaction must regularly be halted in order to re-heat the catalyst.

Cyclic fixed bed dehydrogenation reactors have an operation cycle consisting of several discrete stages. Initially the catalyst bed within the reactor is heated to a temperature of typically 570-680°C, but it might be in the range of 400 to 700°C. The hydrocarbon is then fed into the reactor to begin the dehydrogenation stage, during which the dehydrogenated product is formed. This stage lasts typically 7 to 15 minutes, after which time the temperature drops below that required for efficient dehydrogenation.

Before the catalyst is re-heated the reactor is first purged with steam. After this the regeneration stage begins by allowing heated air into the reactor to heat up the catalyst. During the dehydrogenation phase some of the hydrocarbons are reduced to carbon (coke) which can remain in the reactor after the purging stage. During the regeneration phase this coke burns off, helping to increase the temperature within the reactor. In some cases, it is desirable to add additional heat to the reactor. In these cases, additional fuel gas is injected directly into the air stream.

Regeneration takes roughly 7 to 15 minutes, whereupon the air and any remaining injection gases are evacuated from the reactor. Finally, the catalyst is reduced by the injection of methane at which point the cycle begins again with the introduction of hydrocarbon into the reactor. A single cycle lasts approximately 30 minutes.

It is important to monitor the temperature within the reactor, and in particular the temperature of the catalyst, throughout the cycle so that the maximum amount of dehydrogenated product can be produced with the minimum regeneration period. Typically, thermocouples are employed for this purpose. Given the high temperatures within the reactor the thermocouples are placed within metal thermowells for protection. Within the catalyst bed, additional protection is often provided in the form of an outer ceramic tube to increase the life of the thermowell. This also protects the exterior of the thermowell from being scratched by the catalyst.

However, the use of such ceramic tubes causes problems of its own. Firstly, due to the insulating qualities of the tube, the response time of the thermocouple is increased and the readings obtained are not accurate. Consequently, it is difficult to tell when the catalyst has dropped below the temperature necessary for efficient conversion and subsequently when it has been sufficiently re-heated. This results in a longer cycle then is necessary and hence a lack of efficiency.

Further, in order to allow for the expansion of the thermowell during the reactor cycle, a small air gap (approximately 2mm) exists between the ceramic tube and the thermowell exterior. During the dehydrogenation phase of the reactor cycle, hydrocarbons can enter this gap and react with the metal in the thermowell, leading to coke formation. In addition, the ceramic sleeve may break during operation, allowing hydrocarbons to contact the metal of the thermowell. Later, during the regeneration stage, the coke formed during dehydrogenation burns, heating the thermowell and giving a false reading.

If a conventional stainless steel thermowell is employed, the chromium within it can form a protective chromium oxide layer, but in the extreme conditions of the reactor this layer is soon reduced leading to carburisation of the thermowell. Furthermore, chromium oxide on the surface of the steel will catalyse coke formation in the presence of hydrocarbons.

In addition, the ceramic tubes are very inflexible and brittle and currently therefore these are moulded only to form straight tubes. Consequently, the thermocouples can only be placed along the straight axis of the tubes. This gives a limited view of the temperature distribution within the reactor.

There therefore exists a need for a more accurate means of monitoring the temperature of dehydrogenation reactors.

According to one aspect of the present invention, there is provided a thermowell comprising a solid cylinder with an axially extending cavity for receiving a thermocouple, wherein at least the exterior portion of the thermowell comprises an aluminium-containing stainless steel alloy.

Although it is possible to make only exposed parts of the thermowell with this alloy, preferably substantially all of the thermowell is made of the aluminium containing alloy.

When employing a thermowell according to the present invention, the need for an external protection tube is removed. The aluminium within the thermowell alloy reacts with oxygen to form a thin layer of aluminium oxide on the exterior of the thermowell. This layer provides protection against the extreme heat found within the catalyst but is thin enough to allow the thermocouple to quickly detect changes in temperature. Therefore the thermocouple can give a more accurate indication of when certain temperatures are reached.

As this layer is integral to the thermowell there is no air gap within which coke can form and consequently distort readings during the regeneration phase. Further, if scratched the layer is self healing, simply drawing more aluminium to the surface of the thermowell to reform the layer. This reduces the maintenance required.

The invention also extends to a method of determining temperature in a reactor comprising providing a thermocouple in a thermowell with the reactor, wherein the thermowell comprises an aluminium-containing stainless steel alloy. The method is especially suitable for dehydrogenation reactors.

In order to provide a sufficient supply of aluminium while still providing a strong and heat resistant device, the thermowell alloy preferably comprises 1 - 15% aluminium and more preferably 4 - 6%.

In order to provide a thermowell of sufficient strength and hardness at high temperatures, the material preferably comprises 15 - 30% chromium and more preferably 20-24%. Preferably the remainder of the alloy is comprised of iron and other incidental alloying constituents.

The properties of a protective shield comprising such an alloy as described above would also be beneficial in other measurement instruments used in dehydrogenation reactors, such as tubes for taking gas samples or catalyst sample baskets (used to hold samples of catalyst whilst being tested in the reactor). Therefore, viewed from another aspect the invention provides a device for use in dehydrogenation reactors, the exterior of which comprises an aluminium containing stainless steel alloy.

Further, other protection structures comprising such an alloy would be useful in many other areas containing high temperature environments. Consequently, viewed from another aspect the present invention provides a protective shield for a measuring device, at least the exterior of which comprises an aluminium-containing stainless steel alloy.

The shield can either be a separate entity from the measuring device, such as a thermowell, or it could be integral to the device, such as when used on gas sample tubes.

In order to allow the thermowell to immediately provide an optimum aluminium oxide layer upon placement in the reactor, it is preferable that it be oxidised prior to initial use. This starts development of the layer which can then be maintained and replenished during the regeneration stage of the reactor cycle. Oxidation is preferably carried out by heating the thermowell to approximately 1050°C and passing air over it, preferably for at least 8 hours. While such preoxidation is beneficial, it has been found that the shield provides adequate protection even when this is not carried out and the aluminium oxide layer is left to build up during the use of the reactor.

The ability of the thermowell of the present invention to be used without a ceramic tube allows greater freedom when designing its shape. Therefore, the thermowell can be designed to house a number of thermowells within a two dimensional plane. Several thermowells can be placed in different planes to build up a three dimensional image of the temperature changes within the reactor.

Therefore, viewed from a further aspect the invention comprises a thermowell for use in a dehydrogenation reactor wherein the thermowell is shaped so as to house a plurality of thermocouples within a two dimensional plane.

While ordinary thermowells can be used, it is preferable that the thermowell comprises an aluminium stainless steel alloy, preferably being of the composition discussed above, so that the previously discussed benefits can be obtained.

The thermowells may be any shape such as square or S-shaped but are preferably shaped to fit the dimensions of the reactor. In the case of a conventional dehydrogenation reactor therefore the thermowell is preferably ring shaped. Thus, thermocouples maybe radially spaced around the thermowell.

A preferred embodiment of the invention will now be described, by way of example only, with reference to the accompanying drawings, in which;
FIG 1 shows a dehydrogenation reactor with a conventional thermowell device;
FIG 2 shows a cross section of a conventional thermowell contained within a ceramic protection tube as used in the prior art;
FIG 3 shows a cross section of a thermowell according to the present invention; and
FIG 4 shows a dehydrogenation reactor containing thermowells according to a preferred embodiment of the invention.

A dehydrogenation reactor 10 is typically made of steel. The inside of the reactor is floored with ceramic tiles and covered with brick insulation to keep the heat within the reactor to promote the reaction and also to protect the steel reactor. Gas and air can pass through holes in the brick to reach the catalyst bed 12 contained in the centre of the reactor 10.

The reactor comprises three inlets 14, 16, 18, and three outlets 11, 13, 15 for the various gases used during the reactor cycle. During the dehydrogenation phase propane enters the reactor 10 via inlet 14. As the propane passes through the catalyst bed 12 it is converted into propylene, hydrogen and other by products. These gases and any unconverted propane exit the reactor through outlet 15.

Once the dehydrogenation phase is complete, steam is flushed through the reactor 10 to remove any residual hydrocarbons within the reactor.

The warm air and injection gases used to reheat the catalyst bed 12 are then fed into the reactor 10. The injection gas burns in and around the catalyst bed to assist in heating it to the correct temperature for dehydrogenation. Finally, a reduction gas such as methane is fed into the reactor 10 to reduce the catalyst.

Throughout the cycle, thermocouples are used to monitor the temperature of the catalyst bed 12. Four thermowells 171, 172, 173, 174, are positioned along the central axis of the reactor 10. Each thermowell contains three thermocouples. For each thermowell, one thermocouple 171A, 172A, 173A, 174A is near the top of the catalyst bed 12, one 171B, 172B, 173B, 174B, is at the centre and one 171C, 172C, 173C, 174C is at the bottom.

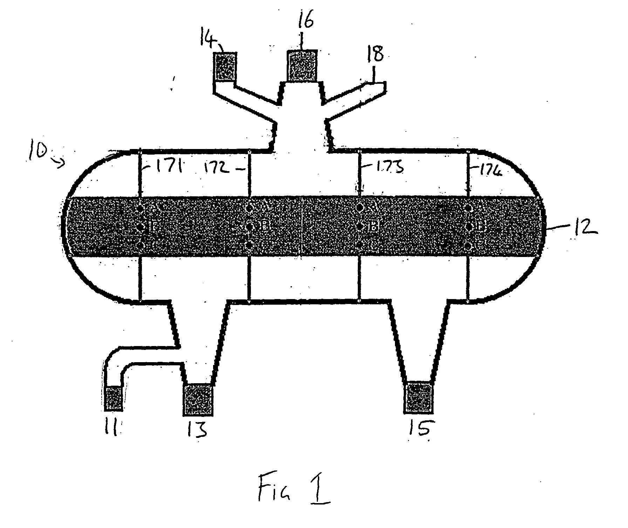

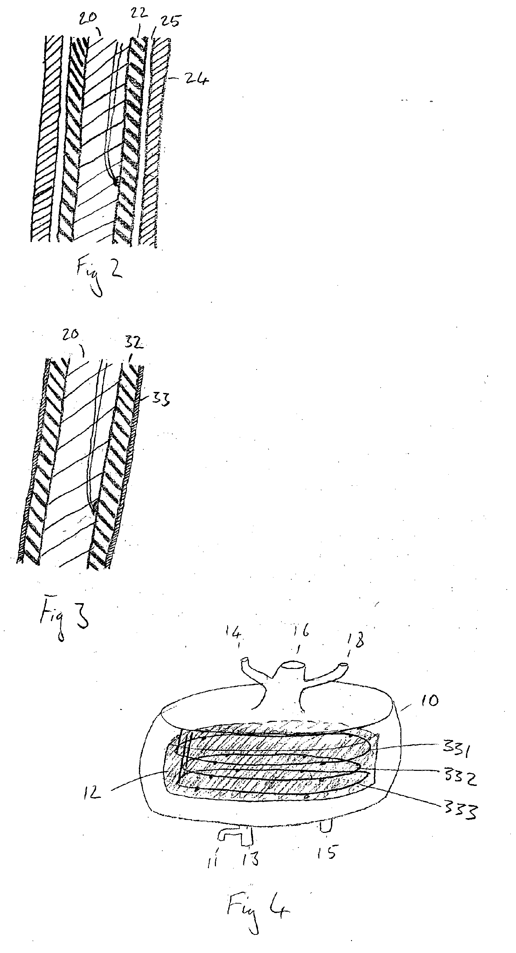

FIG 2 shows a section through a conventional thermowell 22 in the vicinity of a thermocouple 20. The thermocouple 20 is in an interference fit with thermowell 22. This facilitates heat conduction between the two elements. The thermowell 22 is in turn contained in a ceramic protection tube 24.

During a complete dehydrogenation cycle, the temperature within the reactor decreases (as the endothermic reaction takes place) and subsequently increases (as the catalyst is regenerated). This causes the metal thermowell 22 to expand and contract during every cycle. To accommodate this, an air gap 25 of approximately 2mm must be left between the thermowell 22 and the ceramic tube 24. During the dehydrogenation phase propane can enter this gap and, due to the catalyst action of the iron and nickel within the thermowell 22, form coke. This coke then burns during the regeneration phase to give false readings.

The thermowell 32 of the illustrated embodiment of the present invention differs from the conventional thermowell 22 in that it is made of an alloy comprising between 4-6% aluminium. When this thermowell is exposed to oxygen an aluminium oxide layer 33 is formed on the surface of the thermowell 32. This provides a satisfactory level of heat and scratch protection for the thermowell 32. However, the layer 33 is approximately 1 - 5 µm in thickness and is therefore thin enough to allow the thermocouple 20 to detect temperature changes in a shorter space of time, thus increasing its effectiveness.

In order to build up the layer 33, before the thermowell is used for the first time it is oxidised at high temperature. If the layer 33 is scratched during use in the reactor 10, it can be replenished during the regeneration phase, when heated air is passed through the reactor 10.

Using a thermowell 32 in accordance with the present invention eliminates the need for a separate protection tube 24 and thus the problem of coke forming in the air gap 25 is negated.

Further, the thermowell 33 can be moulded very easily into a variety of shapes. This allows the thermocouples 20 to be placed within the reactor 10 with greater flexibility. FIG 4 shows a reactor 10 in which three thermowells 331, 332, 333 according to the preferred embodiment have been placed in the catalyst bed 12. As the reactor is round, the thermowells 331, 332, 333 are ring shaped to allow the thermocouples within them to obtain readings from different places within their respective planes within the reactor. This gives the operator a three dimensional view of the temperature changes within the reactor 10.

## Claims

**1.** A thermowell comprising a solid cylinder with an axially extending cavity for receiving a thermocouple, wherein at least the exterior portion of the thermowell comprises an aluminium containing stainless steel alloy.

**2.** A thermowell as claimed in claim 1 wherein the stainless steel alloy comprises 1 - 15% aluminium.

**3.** A thermowell as claimed in claim 2 wherein the alloy comprises 3 - 10% aluminium.

**4.** A thermowell as claimed in claim 2 or 3 wherein the alloy comprises 4 - 6% aluminium.

**5.** A thermowell as claimed in claim 4 wherein the alloy 5% aluminium.

**6.** A thermowell as claimed in any preceding claim, wherein the alloy comprises 20 - 24% chromium.

**5.** A thermowell as claimed in any preceding claim wherein the thermowell is oxidised prior to initial use.

**6.** A dehydrogenation reactor comprising a catalyst bed which in use contains thermowells in accordance with any of the preceding claims.

**7.** A protective shield for a measuring device, at least the exterior of which comprises an aluminium containing stainless steel alloy.

**8.** A device for use in a dehydrogenation reactor, at least the exterior of which comprises an aluminium containing stainless steel alloy.

**9.** A method of determining temperature in a reactor comprising providing a thermocouple in a thermowell within the reactor, wherein the thermowell comprises an aluminium-containing stainless steel alloy.

**10.** A method as claimed in claim 9, wherein the method further,comprises the step of pre-oxidising the thermowell.

**11.** A method as claimed in claim 10 wherein the pre-oxidisation step comprises heating the thermowell to approximately 1050°C and passing air over it.

**12.** A method as claimed in claim 11 wherein air is passed over the thermowell for at least 8 hours.
